# EUROPÄISCHE PATENTANMELDUNG

(11) **EP 1 903 268 A2**
(43) Veröffentlichungstag der Anmeldung: **26.03.2008**
(21) Anmeldenummer: 07018156.5
(22) Anmeldetag: 15.09.2007
(51) Int. Cl.: F16K 35/02, F16K 31/60

(54) **Stellgriff für ein Wasserventil**

(30) Priorität: 25.09.2006 DE 102006045540
(71) Anmelder: Grohe AG, 58675 Hemer (DE)
(72) Erfinder: Allard, Jochen, 58708 Menden (DE); Kirchhoff, Andreas, 58708 Menden (DE); Heupel, Norbert, 59872 Meschede (DE); Kinikarslan, Turgut, 58454 Witten (DE); Hegemann, Ludger, 59227 Ahlen (DE)

(57) **Zusammenfassung**

Bei einem Wasserventil für den Sanitärbereich mit einem Stellgriff, der an einer aus einem Ventilgehäuse bewegbar herausgeführten Ventilspindel befestigt ist und der einen Festanschlag aufweist, welcher mit wenigstens einem an dem Ventilgehäuse angeordneten Anschlag zusammenwirkt, wobei am Stellgriff ein weiterer nach außen verdeckt angeordneter und aus seiner Anschlagposition lösbarer Anschlag vorgesehen ist, ist vorgeschlagen, dass zur Auslenkung des lösbaren Anschlags aus seiner Anschlagposition und zur Entriegelung der Drehwinkelbegrenzung eine Vorrichtung zum Zusammenwirken mit dem Stellgriff bereitgestellt ist.

## Beschreibung

Die Erfindung betrifft ein Wasserventil für den Sanitärbereich mit einem Stellgriff, der an einer aus einem Ventilgehäuse bewegbar herausgeführten Ventilspindel befestigt ist und der einen Festanschlag aufweist, welcher mit wenigstens einem an dem Ventilgehäuse angeordneten Anschlag zusammenwirkt, wobei am Stellgriff ein weiterer nach außen verdeckt angeordneter und aus seiner Anschlagposition lösbarer Anschlag vorgesehen ist.

In öffentlichen Gebäuden oder bei öffentlich genutzten Wasserarmaturen ist es üblich wegen der Verbrühgefahr, die Wassertemperaturen auf eine maximale Endtemperatur von ca. 43 ° Celsius zu beschränken. Bei diesen Temperaturen kann jedoch eine Verkeimung mit Legionellen etc. auftreten, so dass in regelmäßigen Abständen eine thermische Desinfektion, bei der Wasser mit einer Temperatur von ca. 70° durch das Leitungs- und Armaturensystem gespült wird, wünschenswert ist. Daher sind Wasserventile notwendig, mit denen im normalen Gebrauch eine Temperatur von maximal 43 ° voreingestellt werden kann, aber diese Voreinstellung für Desinfektionszwecke etc. bis zu einer weiteren Justage-Einstellung verändert werden kann.
Wasserventile mit Stellgriffen dieser Art werden sowohl zur Temperatureinstellung bei Mischventilen für Kalt- und Warmwasser zur Begrenzung der einstellbaren Temperatur als auch bei Mengenregulierventilen zur Begrenzung der maximalen Durchflussmenge eingesetzt. Diese Ventile weisen dazu einen festen Endanschlag oder Festanschlag auf, der die maximale Temperatur oder die maximale Durchflussmenge festlegt und einen weiteren lösbaren Anschlag auf, mit dem die Einstellungen für den normalen Gebrauch bestimmt werden.

Ein derartiges Wasserventil ist aus der deutschen Offenlegungsschrift DE 195 19 816 A1 bekannt. Hierbei ist der lösbare Anschlag von einem äußeren, abnehmbaren Teil des Stellgriffs verdeckt. Derartige Teile oder Schutzkappen besitzen in der Regel einige Spalten oder Öffnungen, in die der Installateur oder Hausmeister etc. mit einem Werkzeug eingreifen muss, um die Kappe zu entfernen. Erst dann können notwendige Einstellungen oder die Vergrößerung des Drehwinkelbereichs des Ventils bewirkt werden.

Weiterhin ist es auch bekannt, dass bei einem Wasserventil mit gattungsgemäßem Stellgriff der lösbare Anschlag oder ein mit ihm verbundenes Teil wenigstens zum Teil aus einem magnetisch wirksamen Werkstoff besteht und mit einem von außen an den Stellgriff heran bringbaren Magneten aus seiner Anschlagposition ausgelenkt werden kann. Hierzu ist jedoch ein sehr starker Magnet erforderlich, der schlimmstenfalls mit seinem Magnetfeld Störungen bei elektronischen Geräten hervorrufen kann.

Der Erfindung liegt die Aufgabe zugrunde, die vorgenannten Nachteile im Stand der Technik zu beseitigen.

Diese Aufgabe wird durch ein Wasserventil mit den Merkmalen des Anspruchs 1 gelöst.
Demnach besteht das Wesen der Erfindung darin, bei einem Wasserventil für den Sanitärbereich mit einem Stellgriff, der an einer aus einem Ventilgehäuse herausgeführten Ventilspindel befestigt ist und der einen Festanschlag, welcher mit wenigstens einem an dem Ventilgehäuse angeordneten Anschlag zusammenwirkt, und zur Drehwinkelbegrenzung wenigstens einen weiteren, aus seiner Anschlagposition lösbaren Anschlag aufweist, eine Vorrichtung zum Aufschieben auf den Stellgriff vorzusehen, welche mit dem Stellgriff zusammenwirkt, so dass der lösbare Anschlag über seine Anschlagposition hinaus auslenkbar und so die durch den lösbaren Anschlag gegebene Drehwinkelbegrenzung entriegelt ist.
Mit den vorgeschlagenen Maßnahmen kann eine Auslenkung des lösbaren Anschlags erreicht werden, ohne dass Teile des Stellgriffs demontiert werden müssen. Weiterhin kann die Grundjustage, die durch den Festanschlag und den lösbaren Anschlag vorgegeben ist, beibehalten werden. Vorteilhafterweise ist die Vorrichtung auf eine Griffhülle des Stellgriffs aufschiebbar und auch drehfest mit diesem verbindbar. Dadurch wird ermöglicht, das Ventil mit einer Hand und ohne Zusatzwerkzeug zu bedienen.

Eine vorteilhafte Weiterbildung der Erfindung sieht dabei vor, dass innerhalb des Stellgriffs eine erste Anschlaghülse, die die Anschlagposition des lösbaren Anschlags definiert, verschieblich angeordnet ist. Zur Begrenzung eines definierten Drehwinkelbereichs ist die Wand der Anschlaghülse in einem Teilbereich L-förmig mit wenigstens einem radial nach Innen ragenden Schenkel ausgeführt. In der Ausgangsposition der ersten Anschlaghülse korrespondiert der nach innen ragenden Schenkel mit einem an einem Ringelement angeordneten Anschlagnocken, wodurch der lösbare Anschlag definiert wird. Sobald die Anschlaghülse axial innerhalb des Stellgriffs verschoben wird, wird der lösbare Anschlag nicht mehr durch die nach innen ragenden Schenkel begrenzt und der Drehwinkelbereich des Stellgriffs vergrößert.

Gemäß einer Weiterbildung der Erfindung wird die erste Anschlaghülse von einer Feder in ihre Ausgangslage und damit in die Anschlagposition für den lösbaren Anschlag gedrückt, wobei die erste Anschlaghülse entgegen der Kraft der Feder bewegbar und damit innerhalb der Griffhülle axial verschieblich ist.

Um die Kraft zur Verschiebung der ersten Anschlaghülse entgegen der Kraft der Feder auf die Anschlaghülse zu übertragen ist daher wenigstens ein Entsperrstift an der ersten Anschlaghülse und/oder an der Vorrichtung zum Zusammenwirken mit dem Stellgriff vorgesehen. Dazu ist in einer Griffhülle des Stellgriffs eine Öffnung vorgesehen, mittels der ein Kontakt zwischen der Vorrichtung zum Zusammenwirken mit dem Stellgriff und der innenliegenden, ersten Anschlaghülse hergestellt werden kann. Beim Aufschieben der erfindungsgemäßen Vorrichtung auf den Stellgriff wird mittels des Entsperrstifts Druck auf die erste Anschlaghülse ausgeübt und diese aus ihrer Ausgangslage verschoben, so dass kein Auflager mehr für den lösbaren Anschlag gegeben ist. Der Stellgriff kann dann bis zu einer Endposition, die durch den Festanschlag definiert ist, gedreht werden. In diesem Zustand kann die Vorrichtung zum Zusammenwirken mit dem Stellgriff abgezogen werden. Beim Zurückdrehen des Stellgriffs rastet die erste Anschlaghülse aufgrund der Federkraft wieder in ihrer Ausgangsposition ein. Dadurch ist der Drehwinkel wieder auf den eingangs eingestellten Bereich mit der für den normalen Gebrauch bestimmten maximalen Position beschränkt. Daher ist es beispielsweise nach einer thermischen Desinfektion nicht mehr erforderlich, eine neue Justage vorzunehmen

Hierbei ist es von Vorteil, wenn der an der ersten Anschlaghülse vorgesehene Entsperrstift in der Ausgangslage der ersten Anschlagshülse mit einer Griffhülle des Stellgriffs eine Ebene bildet. Dadurch ist von außen sofort sichtbar, ob der Drehwinkelbereich des Stellgriffs gerade im definierten Bereich für den normalen Benutzer liegt oder ob der Drehwinkelbereich beispielsweise für eine thermische Definition vergrößert worden ist. Dazu kann der Entsperrstift an der ersten Anschlaghülse an seinem Ende mit einer farbigen Markierung versehen sein. Je nachdem, ob der Entsperrstift versenkt ist oder eine Ebene mit der Griffhülle bildet, ist diese Markierung auch aus einiger Entfernung sichtbar und zeigt gegebenenfalls die Extremstellung des Ventils an.

Bei einer Ausgestaltung der Erfindung ist bei dem Wasserventil eine Baueinheit aus einem drehfest über eine Riefenverzahnung mit der Ventilspindel verbundenen Ringelement und einer zweiten Anschlaghülse für den Festanschlag vorgesehen ist, wobei an dem Ringelement ein Anschlagnocken vorgesehen ist, der zusammen mit der verschieblichen Anschlaghülse den lösbaren Anschlag bildet.

Bei einer weiteren Ausgestaltung der Erfindung ist bei dem Wasserventil eine zweite Baueinheit aus der ersten Anschlaghülse, der Feder und einem Gleitring vorgesehen. Besonders vorteilhaft ist hierbei, die zweite Baueinheit in der Griffhülle für den Stellgriff vorzumontieren, so dass beim Einbau des StellgrifFs keine Einzelteile verloren gehen können.

Weiterhin ist es von Vorteil, wenn die Griffhülle mittels eines Befestigungselementes axial unverschieblich fixiert ist.

Gemäß einer Ausgestaltung der Erfindung ist die Vorrichtung zum Zusammenwirken mit dem Stellgriff scheibenförmig vorgesehen. Alternativ dazu kann die Vorrichtung zum Zusammenwirken mit dem Stellgriff auch U-förmig vorgesehen sein. Wenn der zusätzlich am Stellgriff Markierungen für die Vorrichtung zum Aufsetzen vorgesehen sind, kann auf diese Weise sehr schnell die Öffnung in der Griffhülle für den Entsperrstift gefunden werden.
Als weitere Alternative kann die Vorrichtung zum Zusammenwirken mit dem Stellgriff auch in Form einer Haube vorgesehen ist. Hierdurch wird ein guter Formschluss mit dem Stellgriff bewirkt, so dass der Griff mit einer Hand bequem bedient werden kann.

Ausführungsbeispiele der Erfindung sind in der Zeichnung dargestellt und werden im Folgenden näher beschrieben. Es zeigt in der Zeichnung
- Figur 1: einen Schnitt durch einen Stellgriff mit auseinander gezogenen Einzelteilen und die Seitenansicht einer Ventilspindel mit Teilen des zugehörigen Ventilgehäuses
- Figur 2: einen Schnitt durch eine Vorrichtung zum Aufsetzen auf den Stellgriff
- Figur 3: einen Schnitt durch einen Stellgriff mit einer Vorrichtung zum Aufsetzen auf den Stellgriff im normalen Gebrauchszustand
- Figur 4: einen Schnitt durch Fig. 3 entlang der Linie IV-IV
- Figur 5: einen Schnitt durch einen Stellgriff mit einer Vorrichtung zum Aufsetzen auf den Stellgriff im entriegelten Zustand
- Figur 6: einen Schnitt durch Fig. 5 entlang der Linie V-V

Der Einfachheit halber sind bei den Ausführungsbeispielen in der Zeichnung gleiche oder entsprechende Elemente mit jeweils gleichem Bezugszeichen versehen.

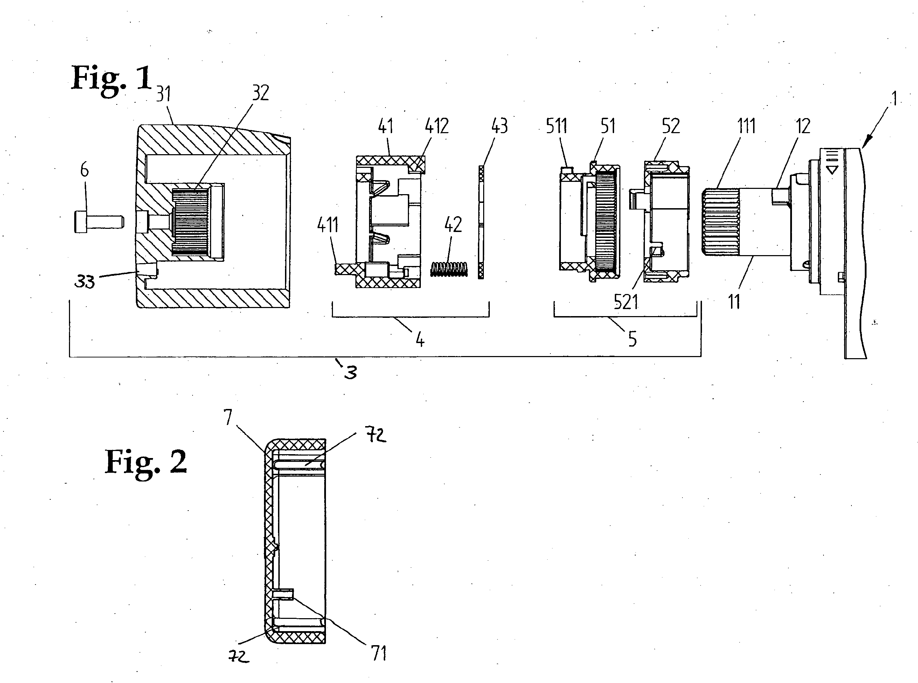

In Figur 1 und Figur 2 ist ein erstes Ausführungsbeispiel der Erfindung in einer Explosionszeichnung dargestellt. An einem zum Teil dargestellten Ventilgehäuse 1 eines Wasserventils, z. B. eines thermostatgeregelten Wassermischventils, ist seitlich eine drehbare Ventilspindel 11 herausgeführt. Auf der Ventilspindel 11 ist eine Riefenverzahnung 111 zur drehfesten Befestigung eines Stellgriffs 3 angeordnet, dessen Griffhülle 31 wiederum eine korrespondierende Riefenverzahnung 32 aufweist. Zur axialen Befestigung des Stellgriffs 3 ist eine Schraube 6 mittig angeordnet. Alternativ zur Befestigung mittels Schrauben kann der Stellgriff 3 auch mit angeformten Schnappzungen versehen sein, die in eine Rastnut an der Ventilspindel eingreifen.
Zum Einbau in den Stellgriff 3 ist eine Baugruppe 4, die aus einer ersten Anschlaghülse 41, einer Druckfeder 42 und einem Gleitring 43 besteht, vorgesehen. Die erste Anschlaghülse 41 weist einen Entsperrstift 411 auf, der in eine Öffnung 33 einer Griffhülle 31 geschoben wird und dessen äußeres Ende im eingebauten Zustand beim vorliegenden Ausführungsbeispiel mit der Außenkante des Stellgriffs 3 eine ebene Oberfläche bildet.
Eine weitere Baugruppe 5 bestehend aus einem Ringelement 51, und einer zweiten Anschlaghülse 52 wird dagegen auf der Ventilspindel 11 vor der Befestigung des Stellgriffs 3 vormontiert.

Eine Vorrichtung 7 zum Aufschieben auf den Stellgriff 3 ist in Figur 2 dargestellt. Die Vorrichtung 7 weist ebenfalls einen Entsperrstift 71 auf, der im eingebauten Zustand mit dem Entsperrstift 411 der ersten Anschlaghülse 41 korrespondiert. Mittels Öffnungen 72 in der Vorrichtung 7, die mit entsprechenden Markierungen (nicht dargestellt) auf der Griffhülle 31 in Einklang gebracht werden können, wird die exakte Position der Vorrichtung 7 gegenüber dem Stellgriff 3 ermittelt.

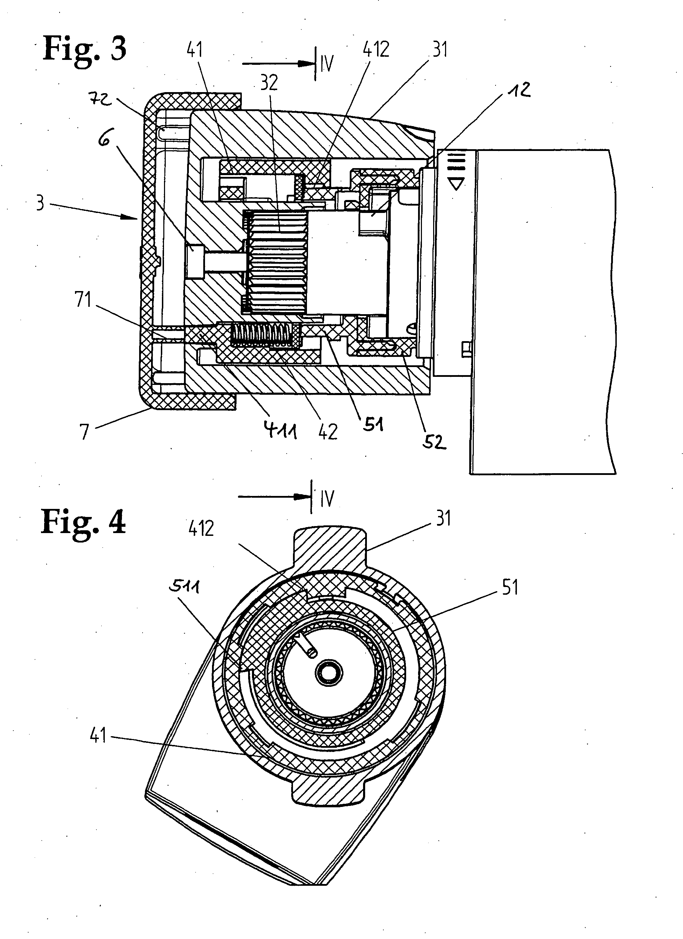

Figur 3 zeigt den Stellgriff 3 mit den Baugruppen 4 und 5 im montierten Zustand. Mit einer Drehbewegung des Stellgriffs 3 kann somit beispielsweise die Mischwassertemperatur des Mischventils eingestellt werden. Die Drehbewegung wird dabei von einem Festanschlag und einem lösbaren Anschlag 511, 412 begrenzt, wobei der lösbare Anschlag einen kleineren Drehwinkelbereich als der Festanschlag eingrenzt.
Die Vorrichtung 7 ist mittels einer Längsnut 72 auf dem Stellgriff 3 geführt, aber noch nicht soweit auf diesen aufgeschoben, dass der Entsperrstift 71 an der Vorrichtung 7 Druck auf den Entsperrstift 411 der ersten Anschlaghülse 41 ausübt. Dadurch ist die Feder 42 noch in ihrer Ausgangsposition. Der Schenkel 412 der ersten Anschlaghülse 41 und der Anschlagnocken 511 an Ringelement 51 liegen in einer Ebene und bilden zusammen, wie in Figur 4 gezeigt, den lösbaren Anschlag der nur einen bestimmte Drehwinkel des Stellgriffs 3 zulässt und somit beispielsweise eine obere Temperatur im Normalzustand definiert.

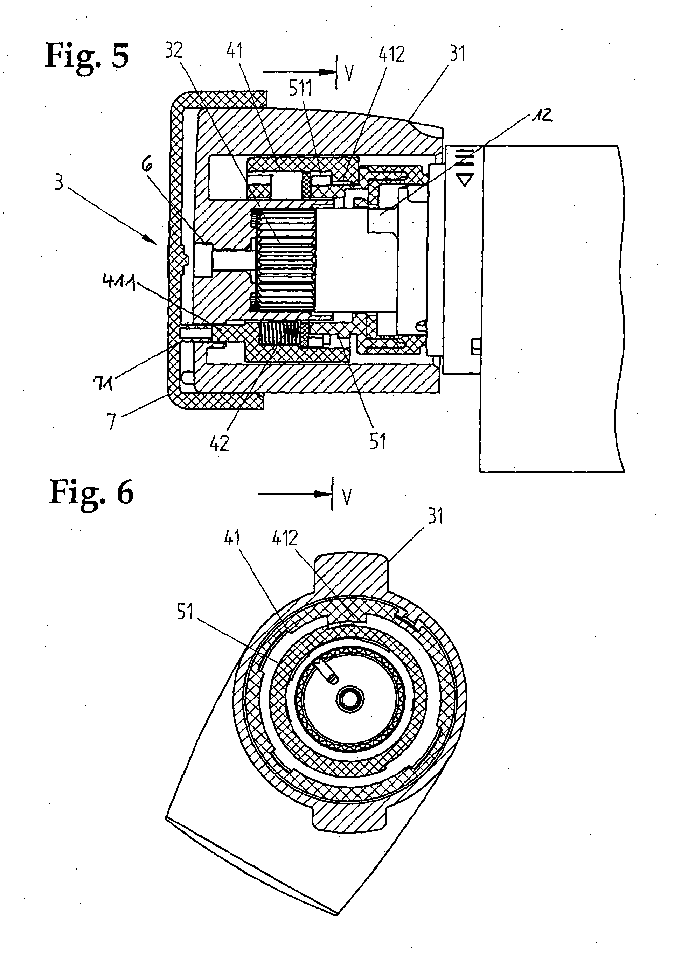

Figur 5 dagegen zeigt Stellgriff 3 mit entriegeltem lösbarem Anschlag. Die Vorrichtung 7 ist so auf Stellgriff 3 aufgeschoben, dass der Entsperrstift 71 an der Vorrichtung 7 in die Öffnung 33 der Griffhülle 31 eingeführt ist und somit Druck auf den Entsperrstift 411 der ersten Anschlaghülse 41 ausübt. Dadurch ist die Feder 42 zusammengedrückt und die erste Anschlaghülse 41 axial innerhalb der Griffhülle 31 verschoben. Da das Ringelement 51 axial fixiert ist, liegen in diesem Zustand der Schenkel 412 der ersten Anschlaghülse 41 und der Anschlagnocken 511 des Ringelements 51 in unterschiedlichen Ebenen und sind damit gegeneinander verdrehbar. Der Drehwinkelbereich des Stellgriffs 3 wird in diesem Zustand durch den Festanschlag begrenzt. Durch die drehfeste Verbindung zwischen Vorrichtung 7 und Stellgriff 3 kann dieser bequem mit einer Hand bewegt werden.
Nach dem Abziehen der Vorrichtung 7 vom Stellgriff 3 verbleibt die erste Anschlaghülse zunächst in der verschobenen Position, solange der Schenkel 412 und der Anschlagnocken sich in ihrer Lage überschneiden. Diese Situation wird für den Benutzer dadurch sichtbar, dass sich der Entsperrstift 411 nicht in einer Ebene mit der Oberfläche der Griffhülle 31 befindet. Beim Verdrehen des Stellgriffs wird die erste Anschlaghülse 41 aufgrund der Federkraft wieder in ihre Ausgangsposition zurück verschoben, sobald der Schenkel 412 und der Anschlagnocken 511 sich nicht mehr überschneiden. Danach ist der lösbare Anschlag wieder gegeben und der Drehwinkelbereich wieder auf den Ausgangswert beschränkt.

### Bezugszeichenliste

- 1: Ventilgehäuse
- 11: Ventilspindel
- 111: Riefenverzahnung
- 12: Anschlagnocken
- 3: Stellgriff
- 31: Griffhülle
- 32: Riefenverzahnung
- 33: Öffnung
- 4: Erste Baugruppe
- 41: erste Anschlaghülse
- 411: Entsperrstift
- 412: Schenkel, Nocken
- 42: Feder
- 43: Gleitring
- 5: Zweite Baugruppe
- 51: Ringelement
- 511: Anschlagnocken
- 52: Zweite Anschlaghülse
- 521: Festanschlag
- 6: Schraube
- 7: Vorrichtung zum Aufschieben
- 71: Entsperrstift
- 72: Längsnut

## Patentansprüche

1. Wasserventil für den Sanitärbereich mit
- einem Stellgriff (3)
- - der an einer aus einem Ventilgehäuse (1) herausgeführten Ventilspindel (11) befestigt ist und
- - der einen Festanschlag (521),
- - - welcher mit wenigstens einem an dem Ventilgehäuse (1) angeordneten Anschlag (12) zusammenwirkt, und
- - zur Drehwinkelbegrenzung wenigstens einen weiteren, aus seiner Anschlagposition lösbaren Anschlag (412, 511) aufweist,
**dadurch gekennzeichnet, dass**
eine Vorrichtung (7) zum Zusammenwirken mit dem Stellgriff (3) vorgesehen ist, mit welcher der lösbare Anschlag (412, 511) über seine Anschlagposition hinaus auslenkbar ist, so dass die durch den lösbaren Anschlag (412, 511) gegebene Drehwinkelbegrenzung entriegelt ist.

2. Wasserventil nach Anspruch 1, **dadurch gekennzeichnet, dass** die Vorrichtung (7) auf eine Griffhülle (31) des Stellgriffs (3) aufschiebbar ist.

3. Wasserventil nach Anspruch 1 oder 2, **dadurch gekennzeichnet, dass** die Vorrichtung (7) drehfest auf die Griffhülle (31) des Stellgriffs (3) aufschiebbar ist.

4. Wasserventil nach einem der vorhergehenden Ansprüche, **dadurch gekennzeichnet, dass** innerhalb des Stellgriffs (3) eine erste Anschlaghülse (41), die die Anschlagposition des lösbaren Anschlags (412, 511) definiert, verschieblich angeordnet ist.

5. Wasserventil nach Anspruch 4, **dadurch gekennzeichnet, dass** die Entriegelung der Drehwinkelbegrenzung des lösbaren Anschlags (412, 511) durch die Verschiebung der erste Anschlaghülse (41) aus ihrer Ausgangslage vorgesehen ist.

6. Wasserventil nach Anspruch 4 oder 5, **dadurch gekennzeichnet, dass** die erste Anschlaghülse (41) von einer Feder (42) in ihre Ausgangslage und damit in die Anschlagposition für den lösbaren Anschlag (412, 511) gedrückt ist, wobei die erste Anschlaghülse (41) entgegen der Kraft der Feder (42) bewegbar ist.

7. Wasserventil nach einem der Ansprüche 4 bis 6, **dadurch gekennzeichnet, dass** ein Entsperrstift (411, 71) an der ersten Anschlaghülse (41) und/oder der Vorrichtung (7) zum Zusammenwirken mit dem Stellgriff (3) vorgesehen ist, mit dem die Kraft zur Verschiebung der ersten Anschlaghülse (41) entgegen der Kraft der Feder (42) übertragbar ist.

8. Wasserventil nach Anspruch 7, **dadurch gekennzeichnet, dass** der an der ersten Anschlaghülse (41) vorgesehene Entsperrstift (411) in der Ausgangslage der ersten Anschlagshülse (41) mit einer Griffhülle (31) des Stellgriffs (3) eine Ebene bildet.

9. Wasserventil nach einem der vorhergehenden Ansprüche, **dadurch gekennzeichnet, dass** im Stellgriff (3) eine erste Baueinheit aus einem drehfest über eine Riefenverzahnung (111) mit der Ventilspindel (11) verbundenen Ringelement (51) und einer zweiten Anschlaghülse (52) für den Festanschlag vorgesehen ist, wobei an dem Ringelement (51) ein Anschlagnocken (511) für den lösbaren Anschlag vorgesehen ist.

10. Wasserventil nach einem der vorhergehenden Ansprüche, **dadurch gekennzeichnet, dass** im Stellgriff (3) eine zweite Baueinheit aus der ersten Anschlaghülse (41), der Feder (42) und einem Gleitring (43) vorgesehen ist.

11. Wasserventil nach Anspruch 10, **dadurch gekennzeichnet, dass** die zweite Baueinheit in der Griffhülle (31) für den Stellgriff (3) vormontiert ist.

12. Wasserventil nach einem der Ansprüche 2 bis 11, **dadurch gekennzeichnet, dass** die Griffhülle (31) mittels eines Befestigungselementes (6) axial unverschieblich fixiert ist.

13. Wasserventil nach einem der vorhergehenden Ansprüche, **dadurch gekennzeichnet, dass** die Vorrichtung (7) zum Zusammenwirken mit dem Stellgriff (3) scheibenförmig vorgesehen ist.

14. Wasserventil nach einem der Ansprüche 1 bis 12, **dadurch gekennzeichnet, dass** die Vorrichtung (7) zum Zusammenwirken mit dem Stellgriff (3) U-förmig vorgesehen ist.

15. Wasserventil nach einem der Ansprüche 1 bis 12, **dadurch gekennzeichnet, dass** die Vorrichtung (7) zum Zusammenwirken mit dem Stellgriff (3) in Form einer Haube vorgesehen ist, wobei die Haube einen Mantel aufweist, der auf der Außenseite der Griffhülle (31) geführt ist.

16. Wasserventil nach Anspruch 15, **dadurch gekennzeichnet, dass** in der Vorrichtung (7) zum Zusammenwirken mit dem Stellgriff (3) wenigstens eine Längsnut vorgesehen ist, durch welche die Vorrichtung (7) in der Stecklage auf der Griffhülle (31) axial verschiebbar und drehfest geführt ist.

17. Wasserventil nach Anspruch 15, **dadurch gekennzeichnet, dass** in der in der Griffhülle (31) des Stellgriffs (3) wenigstens eine Längsnut vorgesehen ist, in welcher die Vorrichtung (7) mit einem entsprechenden Formstück in der Stecklage axial verschiebbar und drehfest geführt ist.
